# EUROPÄISCHE PATENTANMELDUNG

(11) **EP 1 457 109 A1**
(43) Veröffentlichungstag der Anmeldung: **15.09.2004**
(21) Anmeldenummer: 03026866.8
(22) Anmeldetag: 24.11.2003
(51) Int. Cl.: A01K 61/00, A01K 63/00, A01K 63/04

(54) **Anlage und Verfahren zur Haltung und Mast von Nutzfischen**

(30) Priorität: 10.03.2003 DE 10310276
(71) Anmelder: Ballies, Uwe, Dr. med., 24194 Kiel (DE)
(72) Erfinder: Ballies, Uwe, Dr. med., 24194 Kiel (DE)
(74) Vertreter: Gosch, Wolf-Dietrich

(57) **Zusammenfassung**

Anlage zur Haltung und Mast von Nutzfischen in einem die Fische aufnehmenden runden Haltebecken, der mit mindestens einem auf seiner Innenseite benachbart zu seinem Rand angeordneten und im Wesentlichen in dessen Richtung gerichteten, eine Rotation des Wassers im Haltebecken (1) erzeugenden Wasserzulauf versehen ist und das Haltebecken in seiner Mitte mit einem Mittelzylinder (2) versehen ist, der an seiner Oberseite aus dem Wasser des Haltebeckens herausragt und über an seiner Unterseite angeordnete Schlitze (8) mit dem Haltebecken (1) verbunden ist.

Das Haltebecken (1) ist in seiner Mitte in seinem Boden (9) mit einer Vertiefung (10) versehen, in die ein mit einem Sedimentationsbehälter (4) verbundenes Saugrohr (11) einer hydropneumatischen Pumpe herein ragt.

Verfahren zur Haltung und Mast von Nutzfischen in einem die Fische aufnehmenden runden Haltebecken unter Verwendung der vorbeschriebenen Anlage.

## Beschreibung

Die Erfindung betrifft eine Anlage zur Haltung und Mast von Nutzfischen in einem die Fische aufnehmenden runden Haltebecken und ein mit dieser Anlage durchzuführendes Verfahren.

Bei der Aufzucht und Haltung von Fischen in sogenannten Fischfarmen werden Haltebecken verwendet, in denen die Fische mit sauberem Wasser und mit Futter versehen werden. Ein großes Problem dabei ist, die Qualität des Wassers zu sichern. Dabei ist es erforderlich, dass das Wasser regelmäßig abgepumpt, aufwändig gereinigt und dann wieder dem Haltebecken zugeführt wird. Da die Reinigung nur unzureichend gelingt, wird ein erheblicher Teil des Wassers regelmäßig durch Frischwasser ersetzt. Sowohl die für die Reinigung des Wassers erforderliche Energie wie auch der Zusatz von erheblichen Mengen Frischwasser führt zu hohen Kosten, die das sogenannte Fischfarming in Haltebecken unwirtschaftlich machen können. Darüber hinaus sinken die nicht wasserlöslichen Sink- und Schwebstoffe (nicht verbrauchtes Fischfutter und Ausscheidungen der Tiere) auf den Boden des Haltebeckens, von wo sie mit erheblichem Reinigungsaufwand entfernt werden müssen.

Aufgabe der vorliegenden Erfindung ist es daher, eine Anlage der eingangs genannten Art zu schaffen, mit deren Hilfe unter geringem Aufwand von Energie und Frischwasser eine Aufrechterhaltung der Versorgung der Fische mit sauberem Wasser sichergestellt werden kann.

Diese Aufgabe wird erfindungsgemäß dadurch gelöst, dass das Haltebecken mit mindestens einem auf seiner Innenseite benachbart zu seinem Rand angeordneten und im wesentlichen in dessen Richtung gerichteten eine Rotation des Wassers erzeugenden Wasserzulauf versehen ist.

Durch Einleitung des Wassers durch diesen Zulauf, in der Regel sind es mehrere um das Becken herum verteilte Wasserzuläufe, kann das Wasser in dem Becken in eine langsame Rotation versetzt werden, was dazu führt, dass die Schweb- und Sinkstoffe sich im Bereich der Mitte des Haltebeckens konzentrieren und dort abgesaugt werden können, ohne dass die gesamte Wassermenge des Haltebeckens aufwändig von diesen Schweb- und Sinkstoffen durch Entnahme, Reinigung und Rückführung des Wassers behandelt werden muss. Darüber hinaus fördert die Rotation des Wassers das Wohlbefinden der Tiere, weil diesen gleichsam das Gefühl vermittelt wird, sich in einem strömenden Gewässer zu befinden. Hierdurch wird der Erfolg der Fischhaltung zusätzlich gesteigert.

Weitere Einzelheiten der Erfindung ergeben sich aus der nachfolgenden ausführlichen Beschreibung und den beigefügten Zeichnungen, in denen eine erfindungsgemäße Anlage in schematischer Darstellung beispielsweise veranschaulicht ist.

In den Zeichnungen zeigen:

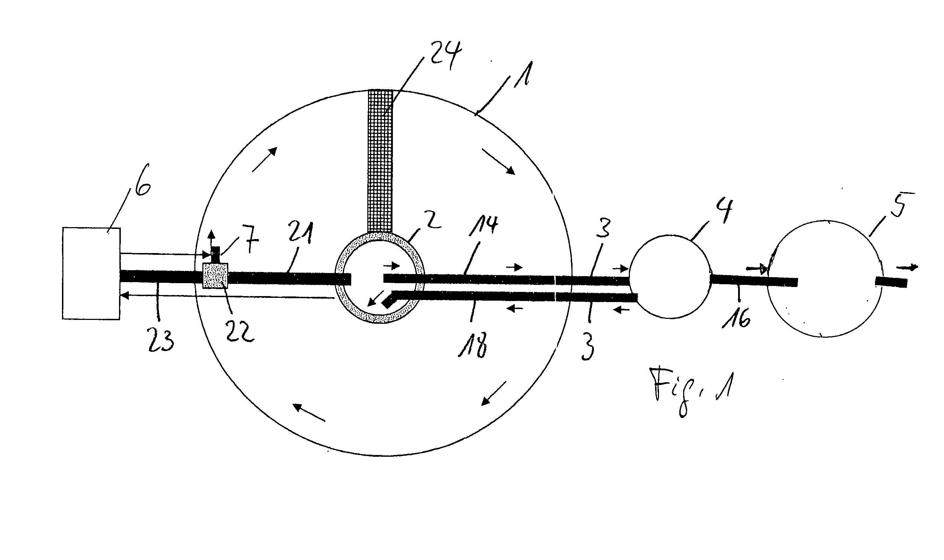

- Fig. 1:: eine Draufsicht auf eine Anlage,

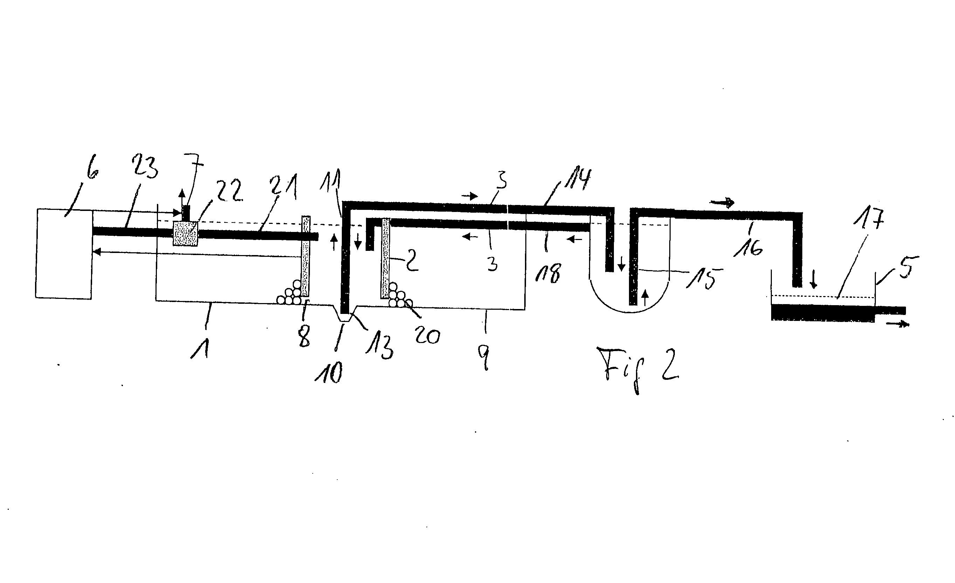

- Fig. 2:: eine Seitenansicht einer Anlage,

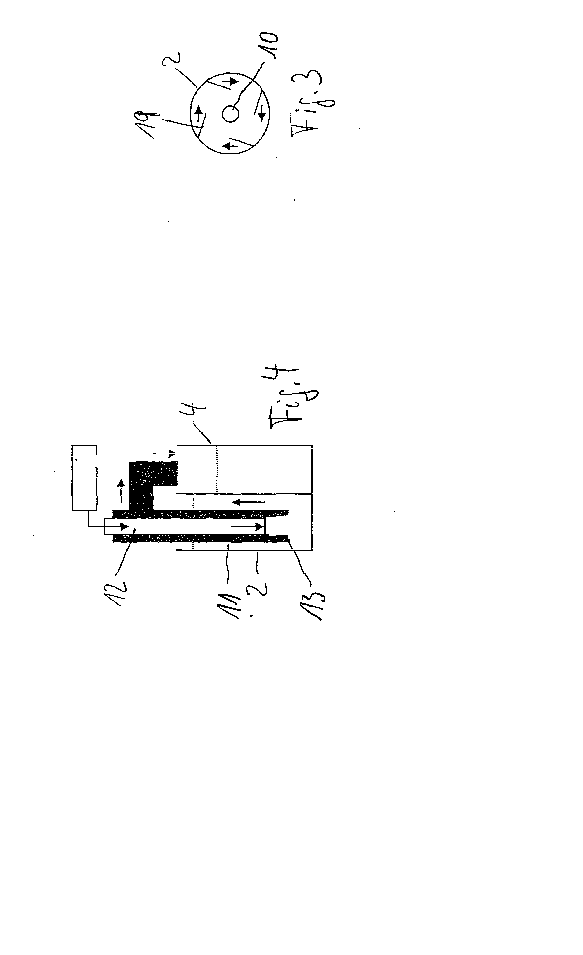

- Fig. 3:: eine Draufsicht auf den Mittelzylinder und
- Fig. 4:: eine Seitenansicht einer in der Anlage verwendeten hydropneumatischen "Mega-Pumpe".

Eine erfindungsgemäße Anlage besteht im wesentlichen aus einem die Fische aufnehmenden runden Haltebecken 1, in dessen Mitte ein senkrecht stehender Mittelzylinder 2 angeordnet ist, der zum einen über Rohrleitungen 3 mit einem Sedimentationsbehälter 4 und dieser wiederum mit einem Entsorgungsbehälter 5 verbunden ist und der Mittelzylinder 2 zum anderen mit einem Bioreaktor 6 verbunden ist, aus dem gereinigtes Wasser über einen Wasserzulauf 7 in das Haltebecken 1 zurückgeführt wird.

Das Haltebecken 1 ist im wesentlichen zylindrisch geformt und der Wasserzulauf 7 ist in der Weise benachbart seiner Mantelfläche angeordnet, dass das aus dem Wasserzulauf ausströmende Wasser das im Haltebecken 1 vorhandene Wasser in Rotation versetzt. Der Wasserzulauf 7 ist vorzugsweise oberhalb der Wasseroberfläche des Haltebeckens 1 angeordnet, um beim Einströmen in das Haltebecken 1 Luft mit einzustrudeln und damit die Sauerstoffversorgung der Fische zu verbessern. Der in der Mitte des Haltebeckens 1 angeordnete Mittelzylinder 2 ist über an seiner Unterseite angeordnete Schlitze 8 mit dem Haltebecken 1 verbunden und ragt mit seiner Oberseite aus der Oberfläche des im Haltebecken 1 befindlichen Wassers heraus. Das Haltebecken 1 ist in seiner Mitte in seinem Boden 9 mit einer Vertiefung 10 versehen, in die ein mit dem Sedimentationsbehälter 4 verbundenes Saugrohr 11 hineinragt. In dem Saugrohr 11 ist ein mit einer Druckluftquelle verbundenes Innenrohr 12 angeordnet, das oberhalb des unteren Endes 13 des Saugrohres 11 mündet. Damit bildet das Saugrohr 11 mit seinem Innenrohr 12 in Verbindung mit der Druckluftquelle eine hydropneumatische Pumpe aus. Durch die aus dem Innenrohr 12 austretende Luft wird das in der Vertiefung sich ansammelnde Sediment aus Schweb- und Sinkstoffen nach oben gefördert und über eine Ablaufleitung 14 in den Sedimentationsbehälter 4 geleitet. Der Sedimentationsbehälter 4 ist über ein Sedimentsaugrohr 15, einer hydropneumatischen Pumpe und einer Ablaufleitung 16 mit dem Entsorgungsbehälter 5 verbunden, der mit einem Sieb 17 abgedeckt ist. Der Sedimentationsbehälter 4 ist über ein Ablaufrohr 18 mit dem Mittelzylinder 2 verbunden, in den es nahe seines Randes eine Rotation des Wassers erzeugend mündet. In dem Mittelzylinder 2 sind schräg von seiner inneren Mantelfläche nach innen verlaufende Leitbleche 19 angeordnet, durch die die Rotationsbewegung des Wassers im Mittelzylinder 2 und die Zentrierung der Schweb- und Sinkstoffe in der Vertiefung 10 gefördert wird.

Der Mittelzylinder 2 ist im Bereich seiner Schlitze 8 von Steinen 20 umgeben, die so bemessen sind, dass durch die Zwischenräume zwischen den Steinen 20 hindurch Jungfische nicht in den Mittelzylinder 2 eindringen können. Der Mittelzylinder 2 ist über eine Überlaufleitung 21 mit dem Bioreaktor 6 verbunden. Der Bioreaktor ist beispielsweise in der DE 102 59 916.5 beschrieben und dient dazu, die Wasser löslichen Stoffwechselprodukte der Fische, insbesondere das Nitrit, aus dem Wasser zu entfernen. In der Überlaufleitung 21 ist ein Dreiwegeventil 22 vorgesehen, das in seinem dritten Weg einen Wasserzulauf 7 des Haltebeckens 1 mit Wasser versorgt.

Der Bioreaktor 6 ist mit einer das Wasser aus seinem Innenraum fördernden Druckluftquelle versehen. Er ist über die in Gegenrichtung als Druckleitung 23 eingesetzte Überlaufleitung 21 und dem Dreiwegeventil 22 mit dem Wasserzulauf 7 verbunden. Wenn nach durchgeführter wenn nach steuerbarer Ruhezeit des Wassers im Bioreaktor 6 dieses aus seinem Innenraum über die Druckleitung und das Dreiwegeventil herausgedrückt wird, strömt es über den Wasserzulauf 7 in das Haltebecken 1 und fördert dort die Rotation des darin befindlichen Wassers.

Für etwaige Wartungsarbeiten ist die Anlage mit einem Revisionssteg 24 versehen, der oberhalb des Haltebeckens und des Mittelzylinders angeordnet ist.

Mit der erfindungsgemäßen Vorrichtung wird das erfindungsgemäße Verfahren wie folgt durchgeführt:

Das Wasser im runden Haltebecken 1 wird in Rotation versetzt, eingeleitetes Wasser (Frischwasser oder gereinigtes Wasser) wird in Rotationsrichtung des im Haltebecken 1 kreisenden Wassers eingeleitet. Schweb- und Sinkstoffe (nicht verbrauchtes Futter und Ausscheidungen der Fische) werden zwischen den Steinen 20 hindurch und durch die Schlitze 8 des Mittelzylinders 2 in den Mittelzylinder 2 geleitet. im Bereich des Mittelzylinders 2 werden die Schweb- und Sinkstoffe in einer Vertiefung 10 im Boden 9 des Haltebeckens 1 gesammelt, aus der Vertiefung 10 wird das Wasser mit den Schweb- und Sinkstoffen über das Saugrohr 11 der dort angeordneten hydropneumatischen Pumpe durch die Ablaufleitung 14 in den Sedimentationsbehälter 4 befördert. Nachdem sich dort am Boden des Sedimentationsbehälters 4 die Schweb- und Sinkstoffe abgesenkt haben, wird das Sediment durch das als hydropneumatische Pumpe ausgebildete Sedimentsaugrohr 15 und die Ablaufleitung 16 in den Entsorgungsbehälter 5 übergeführt und von dort einer umweltfreundlichen Entsorgungen, z.B. zur Herstellung von Düngemitteln, zugeführt. Das vom Sediment befreite Wasser wird über das Ablaufrohr 18 wiederum schräg in Drehrichtung des im Haltebecken 1 rotierenden Wassers in den Mittelzylinder 2 zurückgeführt, das dadurch in Rotation versetzt wird. Hierbei fördern die Leitbleche 19 die Drehung des Wassers und erzeugen zentrierende Strömungen zur Absetzung des aus dem Haltebeckens 1 einströmenden Wassers. Das mit Nitrit als Stoffwechselprodukt der Fische angereicherte Wasser wird aus dem Mittelzylinder 2 in den Bioreaktor 6 zur biologischen Reinigung geleitet und danach über den Wasserzulauf 7 in das Haltebecken 1 zurückgeführt.

Durch die erfindungsgemäße Vorrichtung und das Verfahren ist es möglich, das Wasser im Haltebecken 1 soweit sauber zu halten, dass sich die darin befindlichen Fische wohl fühlen und auch über die Zeit bis zur Schlachtreife ohne Zusatz von Medikamenten und Hormonen gesund bleiben. Durch Verwendung der hydropneumatischen Pumpen kann mit geringem Energieaufwand und ohne dass das Wasser mit beweglichen Teilen in Berührung kommt, die erforderliche Pumpleistung erbracht werden. Der einzige mechanisch bewegliche Teil, der mit Wasser in Berührung kommt, ist das Dreiwegeventil 22. Da durch die Rotation des im Haltebeckens 1 der 2 in der Vertiefung 10 im Boden 9 anreichern, können diese Stoffe durch Entnahme einer vergleichsweise geringen Wassermenge aus dem Haltebecken 1 zuverlässig entfernt werden. Durch die sehr starke Konzentration der Abfallstoffe im Sedimentationsbehälter 4 und danach im Entsorgungsbehälter 5 ist diejenige Wassermenge, die dem Haltebecken 1 in Form von Frischwasser zugeführt werden muss, um dort den Wasserstand zu halten, außerordentlich gering.

Das bedeutet, dass im Ergebnis die Anlage mit sehr geringem Aufwand an Energie und Frischwasser und unproblematischem Abwasser betrieben werden kann und sie damit bei der Haltung auch von anspruchsvollen Nutzfischen, insbesondere von Stören, außerordentlich wirtschaftlich und Standort unabhängig betrieben werden kann. Ein Entweichen von Fischen ist nicht möglich.

## Patentansprüche

1. Anlage zur Haltung und Mast von Nutzfischen in einem die Fische aufnehmenden runden Haltebecken, **dadurch gekennzeichnet, dass** es mit mindestens einem auf seiner Innenseite benachbart zu seinem Rand angeordneten und im wesentlichen in dessen Richtung gerichteten, eine Rotation des Wassers im Haltebecken (1) erzeugenden Wasserzulauf (7) versehen ist.

2. Anlage nach Anspruch 1, **dadurch gekennzeichnet, dass** das Haltebecken (1) in seiner Mitte mit einem Mittelzylinder (2) versehen ist, der an seiner Oberseite aus dem Wasser des Haltebeckens (1) herausragt und über an seiner Unterseite angeordnete Schlitze (8) mit dem Haltebecken (1) verbunden ist.

3. Anlage nach Anspruch 1 und 2, **dadurch gekennzeichnet, dass** das Haltebecken (1) in seiner Mitte in seinem Boden (9) mit einer Vertiefung (10) versehen ist, in die ein mit einem Sedimentationsbehälter (4) verbundenes Saugrohr (11) einer hydropneumatischen Pumpe hinein ragt.

4. Anlage nach Anspruch 1 bis 3, **dadurch gekennzeichnet, dass** in dem Saugrohr (11) ein mit einer Druckluftquelle verbundenes Innenrohr (12) angeordnet ist, das oberhalb eines unteren Endes (13) in dem Saugrohr (11) mündet.

5. Anlage nach Anspruch 1 bis 4, **dadurch gekennzeichnet, dass** das Saugrohr (11) über eine Ablaufleitung (14) mit dem Sedimentationsbehälter (4) verbunden ist.

6. Anlage nach Anspruch 1 bis 5, **dadurch gekennzeichnet, dass** der Sedimentationsbehälter (4) über ein Sedimentsaugrohr (15) einer hydropneumatischen Pumpe und einer Ablaufleitung (16) mit einem Entsorgungsbehälter (5) verbunden ist, wobei das Sedimentsaugrohr (15) bis nahe an den Boden des Sedimentationsbehälters (4) heranreicht.

7. Anlage nach Anspruch 1 bis 6, **dadurch gekennzeichnet, dass** der Sedimentationsbehälter (4) über ein Ablaufrohr (18) mit dem Mittelzylinder (2) verbunden ist, in den es nahe seines Randes in der gleichen, eine Rotation des Wassers erzeugende Richtung mündet.

8. Anlage nach Anspruch 1 bis 7, **dadurch gekennzeichnet, dass** in dem Mittelzylinder (2) schräg vom Rand nach innen verlaufende Leitbleche (19) angeordnet sind.

9. Anlage nach Anspruch 1 bis 8, **dadurch gekennzeichnet, dass** der Mittelzylinder (2) im Bereich der Schlitze (8) von Steinen (20) umgeben ist.

10. Anlage nach Anspruch 1 bis 9, **dadurch gekennzeichnet, dass** der Mittelzylinder (2) über eine Überlaufleitung (21) mit einem Bioreaktor (6) verbunden ist.

11. Anlage nach Anspruch 1 bis 10, **dadurch gekennzeichnet, dass** in der Überlaufleitung (21) ein Dreiwegeventil (22) vorgesehen ist, das mit einem Wasserzulauf (7) des Haltebeckens (1) verbunden ist.

12. Anlage nach Anspruch 1 bis 11, **dadurch gekennzeichnet, dass** der Bioreaktor (6) mit einer Wasser aus seinem Innenraum fördernden Druckluftquelle versehen ist.

13. Anlage nach Anspruch 1 bis 12, **dadurch gekennzeichnet, dass** der Bioreaktor (6) über die in Gegenrichtung als Druckleitung (23) eingesetzte Überlaufleitung (21) und das Dreiwegeventil (22) mit dem Wasserzulauf (7) verbunden ist.

14. Verfahren zur Haltung und Mast von Nutzfischen in einem die Fische aufnehmenden runden Haltebecken unter Verwendung der Anlage gemäß Anspruch 1 bis 13, **gekennzeichnet durch** folgende Verfahrensschritte:
a) das Wasser im Haltebecken wird in Rotation versetzt;
b) eingeleitetes Wasser (Frischwasser oder gereinigtes Wasser) wird in Rotationsrichtung des im Haltebecken kreisenden Wassers nahe seines Randes eingeleitet;
c) Schweb- und Sinkstoffe (nicht verbrauchtes Futter und Ausscheidungen der Fische) werden in einen in der Mitte des Haltebeckens (1) angeordneten Mittelzylinder (2) geleitet;
d) im Bereich des Mittelzylinders (2) werden die Schweb- und Sinkstoffe in eine Vertiefung (9) im Boden (10) des Haltebeckens (1) geleitet;
e) aus der Vertiefung (10) wird Wasser mit den Schweb- und Sinkstoffen abgesaugt und in einen Sedimentationsbehälter (4) geleitet;
f) aus dem Sedimentationsbehälter (4) wird das Sediment abgesaugt und in einen Entsorgungsbehälter (5) geleitet;
g) das vom Sediment befreite Wasser wird in den Mittelzylinder (2) nahe seines Randes und in Drehrichtung des im Haltebecken (1) rotierenden Wassers schräg eingeleitet und das im Mittelzylinder (2) befindliche Wasser wird in Rotation versetzt;
h) das mit Nitrit als Stoffwechselprodukt der Fische angereicherte Wasser wird aus dem Mittelzylinder (2) in einen Bioreaktor (6) zur Denitrifikation geleitet und
i) danach wie unter b) beschrieben in das Haltebecken (1) zurückgeführt.
